# EUROPEAN PATENT SPECIFICATION

(11) **EP 0 315 406 B1**
(45) Date of publication and mention of the grant of the patent: **20.10.1993**
(21) Application number: 88310260.0
(22) Date of filing: 01.11.1988
(51) Int. Cl.: C09D 11/00

(54) **An ink composition for use with ink jet recording apparatus**
Tintenzusammensetzung zur Verwendung in einem Tintenstrahldrucker
Composition d'encre utilisable avec un appareil d'enregistrement par jet d'encre

(30) Priority: 02.11.1987 JP 277710/87; 01.03.1988 JP 47989/88; 28.04.1988 JP 106065/88; 27.09.1988 JP 241619/88
(43) Date of publication of application: 10.05.1989
(73) Proprietor: SEIKO EPSON CORPORATION, Shinjuku-ku Tokyo-to (JP)
(72) Inventor: Matsuzaki, Makoto c/o Seiko Epson Corporation, Suwa-shi Nagano-ken (JP)
(74) Representative: Miller, Joseph

(56) References cited:
- EP-A- 0 099 682
- EP-A- 0 176 228

## Description

This invention relates to ink compositions for use with ink jet recording apparatus.

Ink jet printers are superior to other types of recording apparatus from the point of view of quietness and speed of printing. Conventional ink compositions for ink jet printers are water based. Recording is accomplished by allowing the ink composition to permeate into the recording paper but it tends to diffuse so that the circumference of a recording dot is unclear and print quality deteriorates.

Prior methods of ink jet recording aimed at eliminating these defects are disclosed in US-A-3,653,932, US-A-3,715,219, US-A-4,390,369, US-A-4,484,948 and US-A-4,659,383 and JP-A-55-54368, JP-A-56-113462, JP-A-56-113472 and JP-A-58-108271. In these cases, a hot melt ink composition which is solid at ambient temperature is melted by heating, and the melted ink is jetted onto recording paper. On cooling, the ink composition then solidifies thereby forming a recording dot.

In the case of water based ink compositions, print quality depends on the quality of the recording paper and may be excellent or very poor. Further, it takes a relatively long time for the ink composition to dry after a recording dot is formed, and there is no known water based ink composition that satisfies both the requirements of fast drying and excellent print quality.

In the case of previous hot melt ink compositions, the drying and print quality are good, but the adhesion strength between the ink composition and recording paper is poor, because when the ink composition solidifies it forms a protuberance standing out from the recording paper. Therefore, the ink composition tends to peel off with friction, heat or pressure and tends to adhere to other surfaces, thereby causing "ink pollution".

In order to solve these problems, an ink composition fixed to recording paper using a heat source is now under review. However, as in the case of previous hot melt ink compositions, ink blotting occurs since ink is dispersed into the recording paper by the re-melting.

In the case of a water based liquid ink composition having low viscosity, the ink composition is normally supplied from a stationary ink tank through a tube to a print head which scans the recording paper. Thus the tube must have sufficient flexibility and strength to accommodate movement of the print head. In addition, there must be sufficient space within the ink jet printer to accommodate movement of the tube. Moreover, ink leakage will tend to cause pollution.

In the case where a liquid ink composition having low viscosity is held in an ink tank positioned in a print head, movement of the head generates bubbles in the ink composition and these bubbles when ejected through nozzles of the head can cause cavitation, thereby damaging the head. When such an ink tank is replaced with a new one, fresh ink composition supplied to the ink tank tends to leak from the junction at the outlet of the ink tank. Therefore, the user's hands or clothes tend to become dirty.

The present invention seeks to provide an ink composition having a good fixing strength and a high quality regardless of the type of recording medium and to realise good re-producibility of printing dots without ink blurring. The present invention also seeks to provide an ink jet recording apparatus in which the space for an ink supply is reduced, ink rarely leaks out while the ink is supplied to a print head which is not damaged by cavitation and where there is no difficulty in the replenishment of the ink supply.

According to one aspect of the present invention, there is provided an ink composition for use with ink jet recording apparatus, the composition being in a liquid state at a temperature above ambient temperature and consisting of at least a colouring material, a first component which is a petroleum wax, a fluid paraffin, a mixture of a petroleum wax and a fluid paraffin, and a second component, which is any one or more of fatty acid amide, aromatic amide, aromatic sulphonamide, fatty acid and fatty dibasic acid, characterised in that the composition has a viscosity of not less than 10⁴ mPa.s at ambient temperature, the second component has a melting point that is higher than that of the first component and when the composition is applied to a recording medium, the first component permeates thereinto and the second component and colouring material do not substantially permeate thereinto with the first component.

Preferably the colouring material is dissolved in the second component.

The ink composition may be semi-solid at ambient temperature.

The ink composition may be solid at ambient temperature. In this case, when applied to recording medium, the first component permeates thereinto by application of heat or pressure and the second component maintains the colouring material on the surface of the recording medium.

The weight ratio of the first component and the second component may be between 50:1 and 1:10.

Preferably at the melting point of the second component, the first component, the second component and the colouring material form a uniform phase.

In one embodiment the melting point of the second component is not less than 60°C.

The melting point of the second component is preferably not less than 50°C higher than that of the first component. Alternatively, the melting point of the first component is different by not less than 10° than that of the second component.

The petroleum wax may be paraffin or paraffin wax, or micro-crystalline wax, or a compound wax formed from these waxes as major components.

The colouring material may be a dye or a mixture of dyes.

The ink composition may include ester phthalate compound or polyol-benzoate.

According to another aspect of the present invention, there is provided an ink jet recording apparatus for jetting ink which is liquid at elevated temperature above ambient temperature comprising: a heat means for heating an ink composition comprising a colouring material, a first component and a second component which has a melting point higher than that of the first component, and having a viscosity of not less than 10⁴mPa.s at ambient temperature; and a jet means for jetting said heated ink composition onto said recording medium.

According to a further aspect of the present invention there is provided an ink jet recording method for jetting ink in a liquid phase at an elevated temperature above ambient temperature, comprising: heating an ink composition comprising a colouring material, a first component and a second component which has a melting point higher than that of the first component, and having a viscosity of not less than 10⁴mPa.s at ambient temperature, so that the temperature of ink is higher than ambient temperature; and jetting the ink composition onto the recording medium. The method may comprise a step of fixing the ink composition applied to the recording medium by applying thereto the heat or pressure.

The invention is illustrated, merely by way of example, in the accompanying drawings, in which:-
Figure 1 is a perspective view of an ink jet recording apparatus having an ink-on-demand type ink jet print head;
Figure 2 is a sectional view of an ink-on-demand type ink jet print head;
Figure 3 is a perspective view of a piezo-electric transducer of an ink-on-demand type ink jet print head;
Figures 4 (a) and 4 (b) are perspective and sectional views respectively of an ink container of an ink jet print head; and
Figures 5 (a) and 5 (b) are perspective and sectional views respectively of another form of ink container for an ink jet print head.

In an ink composition according to the present invention, the weight percent of a first component is represented as E1, the weight percent of a second component is represented as E2, and the weight percent of the remaining component is represented as E3. The ratio of these weight percents is desirably in the range between E1:E2 = 50:1 and E1:E2 = 1:10. In the case of a solid ink composition, the ratio of these weight percents is desirably in the range between E1:E2 = 20:1 and E1:E2 = 1:2. The more desirable ratio of these weight percents is in the range between E1:E2 = 10:1 and 1:1. In the case of a semi-solid ink composition according to the present invention, the ratio of these weight percents is more desirably in the range between E1:E2 = 30:1 and 1:2, and much more desirable ratio of these weight percents is between E1:E2 = 10:1 and E1:E2 = 1:1 in order to promote permeation of the first component into a recording medium.

If the ratio is smaller than E1:E2 = 50:1, the solubility of the colouring material is reduced. When the ink composition is melted, the colouring material remains in suspension. If the ratio is greater than E1:E2 = 1:10, the resulting relatively high melting point of the ink composition means it hardly permeates into a recording medium and sufficient strength of fixing cannot be obtained. Especially in the case where there is the further step of ink fixing, the recording dots protrude from the surface of the recording medium and ink fixing is not satisfactory.

Ink fixing on the recording paper is not concerned about whether ink fixing means touches with the recording medium or not. In this method, a heat roll method utilising heat conduction, a hot plate method, a flash lamp method utilising radiant heat, an infrared heater method, an oven method, a halogen lamp method, etc. can be used. The temperature of ink fixing should be in the range between 40°C and 90°C, and desirably between 40°C and 80°C, and more desirably between 40°C and 70°C. Particularly in the case of a solid ink composition, a pressure roll method of ink fixing is also available.

An ink composition according to the present invention is jetted from ink jet recording apparatus under conditions of uniform solution. In the case where the ink composition is semi-solid at ambient temperature, when the jetted ink composition touches a recording medium, the first component of the ink composition selectively permeates thereinto. In the case of the ink composition which is solid at ambient temperature, when the jetted ink composition touches a recording medium, the first component of the ink composition selectively permeates thereinto through the aforementioned ink fixing process. Thus, the concentration of colouring material in the second component on the surface of the recording medium increases as the ink composition cools. Therefore, the colouring material and the second component are deposited according to difference in solubility. The deposited component is fixed on the recording medium and only the first component permeates thereinto. As a result, the resultant ink composition does not suffer from problems of blotting and has good dot reproducibility.

Further, in the case of an ink composition according to the present invention, by completing ink fixing under the above conditions, the first component is first melted to permeate into the recording medium. The colouring material is maintained by the second component and permeates into fibres of the recording medium with penetration of the first component to be made even. Then, the colouring material is fixed by the first component. Since initial diameter of dots is maintained, extremely high re-producibility of dots can be realised.

The present invention will now be explained with reference to various examples.

An ink composition according to the present invention is solid or semi-solid at ambient temperature and can be prepared by known methods. Namely, a first component, a second component and colouring material are mixed together. The mixture is melted by heating at a temperature of not less than the melting point of the second component (desirably not less than 80°C) and thereafter, the melted components are stirred with heating at the same temperature, thereby obtaining a uniformly melted composition. The melted composition is filtered whilst still molten, before being cooled down.

The ink composition, if it is semi-solid at ambient temperature, has a viscosity at ambient temperature of not less than 10⁴mPa.s and a viscosity of 60°C of not less than 10²mPa.s. If the viscosity at ambient temperature is lower than 10⁴mPa.s, ink blotting occurs as with known low viscosity ink compositions. When the viscosity at ambient temperature is not less than 10⁴mPa.s and desirably 10⁵mPa.s, the ink composition is scarcely influenced by external forces and, therefore, ink pollution is not a problem. If the ink composition leaks from a tank, diffusion can be minimised.

With respect to the properties of the ink composition, when the temperature of the ink composition is 80°C to 120°C, the viscosity is not more than 15.0 mPa.s as is desirable from the point of view of stability of ink supply and stability of flight of ink droplets under high speed response of a print head. Further, in order to achieve high response (not less than 2 to 3 KHz), the viscosity is desirably between 7.0 mPa.s and 2.0 mPa.s for smooth ink flow in a print head. The surface tension affects the formation of an ink meniscus in nozzles of the print head and desirably is not more than 50 mN/m. The surface tension, in fact, is desirably not more than 35 mN/m in order to promote a high degree of permeation of the first component into a recording medium after printing.

The desirable properties of the first and second components are as follows:

The first component should not be a solvent for the colouring material and the melting point thereof should be lower than that of the second component.

The viscosity of the ink composition should be as low as possible under a pre-determined relatively high operating temperature of the print head, the viscosity of the first component at ambient temperature (25°C) desirably being not more than 500 mPa.s and desirably not more than 200 mPa.s. Further, the ink jet recording apparatus normally should be able to perform printing when the ambient temperature is -5°C. In order to bring out selected permeation of the first component into recording paper at such a low temperature, the first component must be kept liquid. Therefore, the freezing point of the first component is desirably not more than -10°C. Fluid paraffin and ester phthalate compounds which are liquid at ambient temperature are examples of the first component whose viscosity is not more than 200 mPa.s and whose freezing point is not more than -10°C. Furthermore, when the ink composition is contained in a print head, it is necessary to prevent evaporation. Therefore, the necessary vapour pressure of the first component at 100°C is preferably not more than 1 mmHg.

Compounds satisfying the above criteria for the first component are:
HI-WHITE-70, 350 manufactured by Nippon Oil Co. Ltd., SILKOOL P-55, 70, 360 manufactured by Matsumura Oil Laboratory.
It will be appreciated that the first component may be formed of a mixture of two or more materials.

When a printed paper is subject to relatively high temperature such as 70°C, when a printed paper is left in a motor vehicle, the second component in which the colouring material is dissolved is melted, so that ink blurring occurs. In order to prevent this problem, in the case of the ink composition which is solid at ambient temperature, the following petroleum waxes are preferable as the first component; paraffin, paraffin wax, micro-crystalline wax or a mixture of such materials, which have melting points not greater than 70°C. Specific examples for the first component are:
n-paraffin or iso-paraffin, having between 23 and 32 carbon atoms.
Paraffin wax, Nos. 115, 120, 125, 130, 140, 150, 155 (manufactured by Nippon Seiro Co. Ltd).
Paraffin wax, HNP-3, 9, 10, 11, 16 (manufactured by Nippon Seiro Co. Ltd).
Paraffin wax, SP-0145, 1035, 3040, 3035, 0110 (manufactured by Nippon Seiro Co. Ltd).
Micro-crystalline wax, Hi-Mic-2045, 1045 (manufactured by Nippon Seiro Co. Ltd).
CARTOWAX-3025, 3735, 3640 (manufactured by Nippon Seiro Co. Ltd).

The properties required for the second component of an ink composition according to the present invention are as follows:
The second component dissolves the colouring material.

The melting point of the second component is higher than that of the first component. Fatty amides, aromatic amides, aromatic sulphonamides, fatty acids, fatty dibasic acids, etc. satisfy these conditions. Specifically such materials may be amide erucate, amide laurate, coconut oil amide, stearic acid amide, palmitic acid amide, behenic acid amide, brassidic acid amide, acetamide, benzamide, propionamide, amide oleate, recinoleic acid amide, Amide-O, HT-P, C (manufactured by Lion Akzo Co. Ltd), Amide fatty acid-S, T, P, C, O (manufactured by Kao Corp), O-toluenesulphonamide, P-toluenesulphonamide, behenic acid, stearic acid, palmitic acid, azelaic acid, glutaric acid, sebacic acid and so on. The second component may be a plurality of such materials in admixture.

The second component, for example, may be a fatty acid amide prepared by removing water from the fatty acid ammonium salt or reacting fats or fatty acid esters with ammonium.

When fluid paraffin is used as the first component, the difference between its melting point and that of the second component is preferably not less than 50°C and desirably not less than 80°C. If the difference in melting points is less than 50°C, the solubility of the second component in the first component is higher at ambient temperature. As a result, the selective permeation of the first component into printing paper is insufficient, and the printed ink image is unclear.

When petroleum wax is used as the first component, the difference between its melting point and that of the second component is preferably not less than 10°C, and desirably not less than 20°C. If the difference in melting points is less than 10°C, since there are variations in heating temperature in the ink jet printing apparatus during operation, the second component may be melted at the same time as the first component and, as a result, the effect of selective permeation into the printing paper of only the first component is prevented and the printed ink image is unclear.

In the case of a semi-solid ink composition, if the melting point of the second component is too low, the printed ink image formed by the second component and colour material may melt due to pressure or heat after printing. Then the printing medium, such as printing paper, becomes smudged with ink or other problems arise, such as transfer of ink to other sheets. These problems should be prevented from arising under practical conditions with a temperature as high as 50°C. From experiment it has been found that the melting point of the second component is preferably not less than 60°C.

In the case of a solid ink composition, the melting point of the second component tends to decrease whilst the first component is melted during a printing operation. In order to prevent the occurrence of such a problem and to obtain a stable printed ink image under practical conditions with a temperature as high as 70°C, the melting point of the second component should be not less than 80°C. In the following Examples the second component in each case is a material having a melting point of not less than 60°C.

Desirable colouring materials have the following properties. The colouring material cannot dissolve in the first component, but can dissolve in the second component or vice versa. The colouring material is preferably an oil soluble dye having good heat and water resistance. More specifically, the colouring material may be:

### Black dye

C.I. Solvent Black 3, 22, 23
C. I. Acid Black 123
Sumiplast Black G (BKG), 3BA (manufactured by Sumitomo Chemical Co. Ltd)
Sumisol Black AR sol. (manufactured by Sumitomo Chemical Co. Ltd)
Oil Black BY, BS (manufactured by Orient Chemical Co. Ltd)
Nigrosin
Aizen Spiron Black GMH (manufactured by Hodogaya Chemical Co. Ltd)

### Yellow dye

C.I. Solvent Yellow 19, 21, 61, 80
Aizen Spilon Yellow GRH special (manufactured by Hodogaya Chemical Co. Ltd)
Sumiplast Yellow GG, FC (manufactured by Sumitomo Chemical Co. Ltd)

### Red dye, Magenta dye

C.I. Solvent Red 8, 49, 81, 82, 83, 84, 100, 109, 121 C.I. Dispersers Red 9
Sumiplast Red AS, 3B, FB (manufactured by Sumitomo Chemical Co. Ltd)
Aizen Spilon Red GEH special (manufactured by Hodogaya Chemical Co. Ltd)

### Blue dye, Cyan dye

C.I. Solvent Blue 11, 12, 25, 36, 55, 73
Sumiplast Blue 3R, BG (manufactured by Sumitomo Chemical Co. Ltd)
Sumiplast Turquoise Blue B (manufactured by Sumitomo Chemical Co. Ltd)

### Complementary colour dye

Aizen Spilon Violet C-RH (manufactured by Hodogaya Chemical Co. Ltd)
Aizen Spilon Yellow C-GNHnew (manufactured by Hodogaya Chemical Co. Ltd)
Aizen Methyl Violet Base (manufactured by Hodogaya Chemical Co. Ltd.)
Aizen Crystal Violet Powder (manufactured by Hodogaya Chemical Co. Ltd)
Aizen Methyl Violet pure special (manufactured by Hodogaya Chemical Co. Ltd)
Aizen Victoria pure Blue BOH conc. (manufactured by Hodogaya Chemical Co. Ltd.
Aizen Green C-GH (manufactured by Hodogaya Chemical Co. Ltd)
Aizen S.P.T. Orange 6 (manufactured by Hodogaya Chemical Co. Ltd), etc.

The amount of colouring material used in an ink composition according to the present invention is desirably not more than 10 wt%. When considering the stability of ink droplets in flight under high speed response of a print head and the ideal viscosity of the ink composition, the desirable amount of colouring material is not more than 5 wt%. Further, a number of different dyes can be mixed in order to control the colour of the ink composition.

In the case of a semi-solid ink composition which selectively permeates and has high viscosity, in order to accelerate the permeation of the first component into the recording paper after printing, an ester phthalate compound, polyol-benzoate may be added. Such compounds are organic having a super-cooling property. Therefore, after printing, the increase of viscosity caused by the decrease in temperature of the first component of the ink droplets can be temporarily halted and the permeation of the ink composition can be accelerated. Specifically such organic compounds are dicyclohexyl phthalate, dioctyl phthalate, di-2-ethylhexyl phthalate, glyceryl-tribenzoate, trimethylolethanetribenzoate, pentaerythritol tetrabenzoate, etc. The amount of these compounds in the ink composition preferably is not more than 10 wt% and desirably not more than 7 wt%. Considering the stability of the printed ink image under an operating temperature of about 70°C, the amount of the organic compounds is more desirably not less than 5 wt%.

Since the ink composition according to the present invention is printed under a condition where the temperature is higher than at ambient temperature, anti-oxidants for preventing the ink composition from oxidizing due to the heat may be added, if necessary. Specifically, such anti-oxidants may be dibutyl hydroxy toluene (BHT), IRGANOX 1010, 1035, 1035FF, 1076 (manufactured by Ciba Geigy Japan Co. Ltd) or the like is desirable.

The present invention will be described further with reference to the following Examples. Examples 1 and 2 relate to a semi-solid ink composition having high viscosity. Examples 3 and 4 relate to a solid ink composition.

### EXAMPLE 1

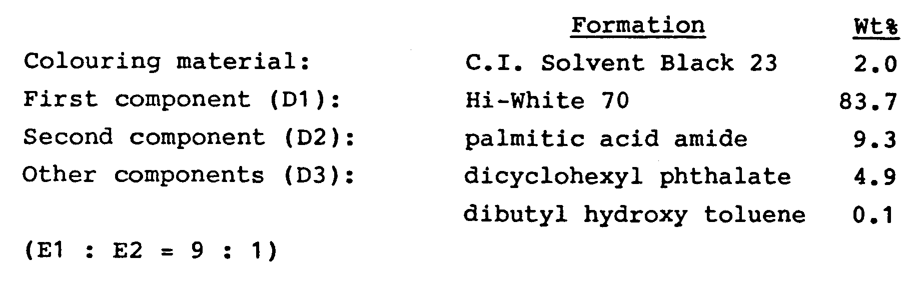

A mixture of the above components was melted at 120°C and stirred while heating for three hours. Under conditions of relatively high temperature, the melted material was filtered with a membrane filter made of polytetrafluoroethylene (TEFLON - trade mark) whose pore size was 5 micron. The resulting ink composition had the viscosity of 4.0 mPa.s at 110°C and a surface tension of 29.0 mN/m.

Subsequently, a known ink-on-demand type ink jet print head which can use hot melt ink was kept at 100°C. The ink composition was filled into the ink jet print head, and bit image printing and character printing was completed on a wood free paper, bond paper, and PPC paper. The following tests were then performed.

### (A1) Friction resistance test

After printing on several recording materials, surface was rubbed with tissue paper. Then the printed surface was tested as to whether ink pollution occurred as time elapsed from printing. The test results were classified as follows:
After 10 seconds, there was no ink pollution .... very good (VG);
After 20 to 30 seconds, there was no ink pollution.... good (G); and
After more than 30 seconds, there was ink pollution.... poor (NG).
Although there were slight differences with paper quality, all the test results were better than "G".

### (A2) Printed material blocking test

Blocking is a phenomenon of an ink blur on the recording medium and ink transfer to other objects placed on the printed recording medium.

At a high temperature of 50°C, a blank recording medium was stacked on recording medium which had been printed and pressure applied thereon for twenty four hours. Then the blank recording medium was inspected to see whether there was ink pollution, whether ink had transferred from the printed recording medium to the blank recording medium, as a result, the diameter of ink dots was maintained in the same condition as before the test. No ink pollution or ink transfer was found.

When the recording medium which had been printed was heated from its reverse side to 70°C for ink fixing after printing, no ink blurring occurred. In this test the result was "VG".

### (A3) Fixed dots re-producibility test

The degree of spread of ink dot diameter after ink fixing (L1) was tested as to whether it falls within the scope of the following formula with respect to the dot diameter before ink fixing (L2).

$\text{L2 ≦ 1.5 L1}$

The diameter of dots of the fixed ink composition according to this Example satisfied the above formula. Here, ink fixing was carried out according to the conditions shown in Table 1.

### EXAMPLE 2

In the same manner as Example 1, the ink composition shown in 2-1 to 2-13 of Table 1 were prepared.

These ink compositions have a high viscosity which is not shown by the ink composition of Example 1. Table 1 shows the materials usable as the first component, the second component, the other components and colouring materials and the amounts thereof.

Examples 2-1 to 2-10 show especially good printing properties with high speed response since they have low viscosity. Further, all the materials had good effects in the selective permeation of the first component into the recording medium.

### Comparative Example

In the same manner as Example 1, the ink compositions C-1 to C-3 of Table 1 were prepared. Example 2 and the Comparative Example were tested in the same manner as described in Example 1 (test (A1) and test (A2)), and the result is shown in Table 3. Further, when the fixing method shown in Table 1 was carried out, all the ink compositions of Example 2 showed good result under tests (A1) and (A3). Furthermore, when test (A2) was carried out at a high temperature of 70°C, the ink composition with the second component having a melting point of not less than 80°C had good effects.

The test results for the Comparative Example were as follows:
C-1: Since the fatty acid amide was formamide whose melting point is 2.5°C, the second component was liquid at ambient temperature. Therefore, in the blocking properties test (test (A2)) ink blurring occurred. Further, even after ink fixing, blurring of the printed ink occurred.

C-2: Since the weight ratio (E2) of the second component was greater than the weight ratio (E1) of the first component in comparison with E1:E2 = 1:10, printed ink dots were not sufficiently even, and the result of test (A1) (friction resistance) was "NG". After fixing, the friction resistance was still "NG".

C-3: Since the weight ratio (E1) of the first component was greater than the weight ratio (E2) of the second component in comparison with E1:E2 = 50:1, the colouring material was not uniformly dissolved when the ink composition was prepared. Therefore, when the ink composition was filled in a print head, ink clogging of nozzles thereof arose in ink ejection.

### EXAMPLE 3

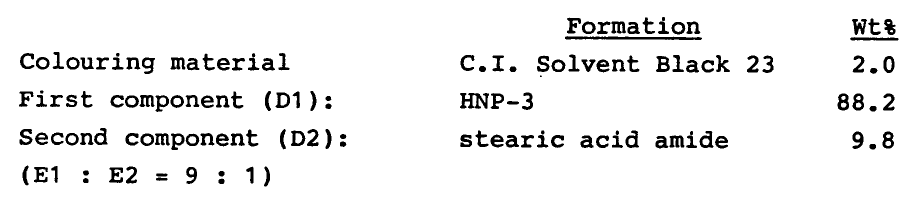

The mixture of the above components was melted at 120°C, and stirred with heating for three hours. Thereafter, the melted mixture was filtered under pressure with a membrane filter made of polytetrafluoroethylene (TEFLON - trade mark) having a pore size of 5 micron. The resulting ink composition had a viscosity of 5.5 mPa.s at 110°C and the surface tension was 29.0 mN/m.

Subsequently, the ink composition was filled in an ink-on-demand type ink jet print head which can use hot melt ink. After bit image printing and character printing, the ink was fixed by heating with a hot plate at 70°C. The results of tests (A1) to (A3) were "G".

### EXAMPLE 4

In the same manner as Example 3, ink compositions 4-1 to 4-9 shown in Table 2 were prepared. These Examples show solid ink compositions according to the present invention. Table 2 shows the materials usable as the first component, the second component, the other components and colouring materials and the practical amounts thereof. These materials had good effects in selective permeation of the first component into printing medium, through ink fixing process and dot re-producibility.

### Comparative Example

In the same manner as Example 3, ink compositions D-1 to D-3 of Table 2 were prepared. Example 4 and the Comparative Examples were tested in the same manner as Example 3 and the results shown in Table 3 were obtained. When each fixing method shown in Table 2 was carried out with respect to the ink compositions of Example 4, tests (A1) and (A3) showed good results.

When test (A2) was carried out at 70°C, the ink compositions where the second component had a melting point not less than 80°C showed good results. The results for the Comparative Examples under test were as follows:
D-1: When the second component was a fatty amide, amide oleate having a melting point of 73°C, the second component melted since the melting point decreased when the first component was melted. Therefore, the diameter of the dots obtained after the fixing treatment was twice as large as that of the dots before the fixing treatment. Further, blurring of the ink dots occurred.

D-2: Since the weight ratio (E2) of the second component was greater than that of the weight ratio (E1) of the first component in comparison with E1:E2 = 1:1, the ink dots obtained after fixing was not sufficiently even and the blocking phenomenon occurred during test (A2) during which the ink dots were left at high temperature.

D-3: Since the weight ratio (E1) of the first component was greater than the weight ratio (E2) of the second component in comparison with E1:E2 = 20:1, colouring material was not dissolved uniformly when the ink composition was prepared. Therefore, when ink was filled in a print head, ink choked nozzles thereof during a printing operation.

It will be appreciated that the present invention is not limited to the above Examples.

The fixing process also functions for accelerating the permeation of the first component into the recording medium. Therefore, the fixing process may follow printing or it may be carried out by heating the recording medium to a pre-determined temperature before printing takes place.

Further, the compositions according to the present invention can avoid ink pollution when the ink composition is supplied to a print head.

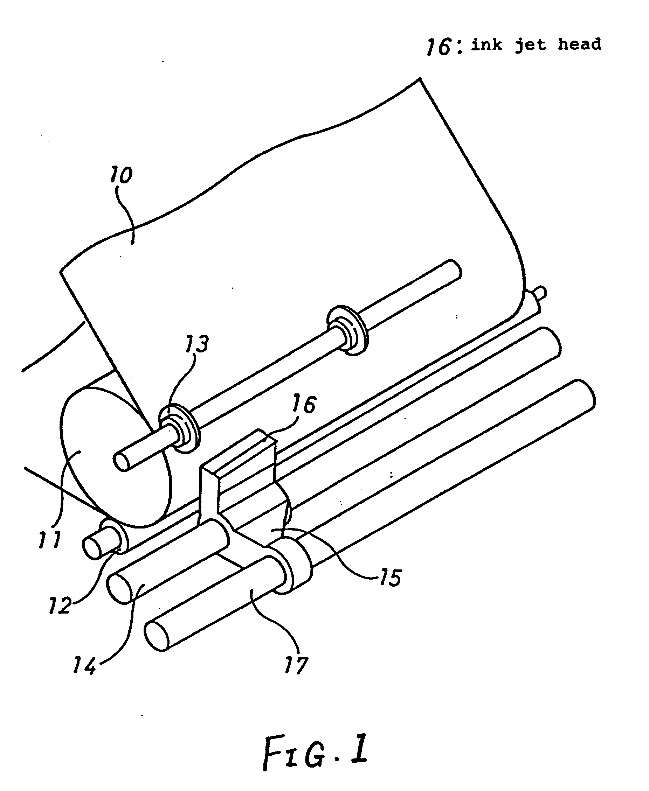

Referring now to Figure 1, there is shown a perspective view of an ink-on-demand type ink jet recording apparatus. In Figure 1, recording paper 10 winds around a platen 11 and is in contact with feed rollers 12, 13. An ink jet print head 16 is mounted on a carriage 15 which us guided by guide axles 14 and 17 and is movable in parallel with the axis of the platen 11. The head 16 has a plurality of nozzles which can be controlled individually to produce ink droplets. The head is scanned in the direction of the axis of the platen and an ink composition is selectively jetted from the nozzles thereby forming an ink image on the recording paper 10. The recording paper 10 is fed by rotation of the platen 11 and the feed rollers 12, 13 in a minor scanning direction which is orthogonal to the major scanning direction.

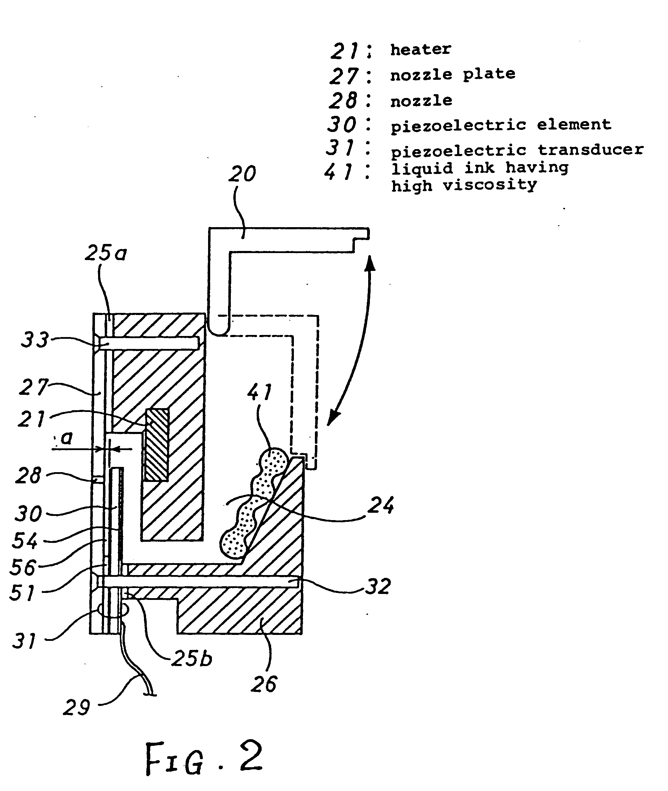

Figure 2 is a sectional view of the head 16. A piezo-electric transducer 31 and a nozzle plate 27 are fixed to a frame 26, through resilient sheets 25a and 25b by screws 32, 33. The nozzle plate 27 is a thin metallic plate in which is formed a plurality of nozzles 28.

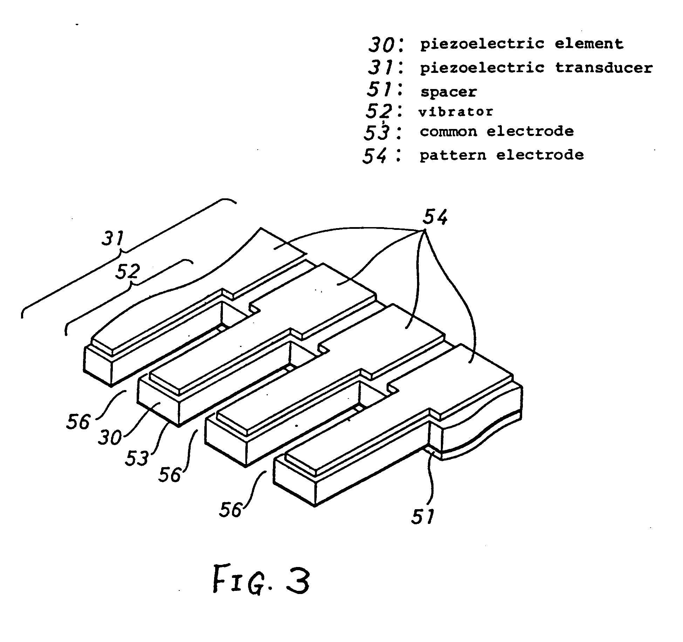

Figure 3 is a perspective view of the piezo-electric transducer 31. A piezo-electric element 30 is made of PZT and has a common electrode layer 53 comprising a thin gold layer and a thin nickel spacer layer 51 on one side and a thin nickel pattern electrode layer 54 on the other side. The piezo-electric transducer 31 is divided by notches 56, thereby forming a plurality of vibrators 52.

In Figure 2, the vibrators are opposed to the nozzles 28 corresponding thereto, respectively, through a small gap a. Wires 29 are individually connected to the pattern electrode layers 54 and a voltage is selectively applied. Ink supply is operated by hand when the amount of ink in the head is reduced to below a pre-determined value.

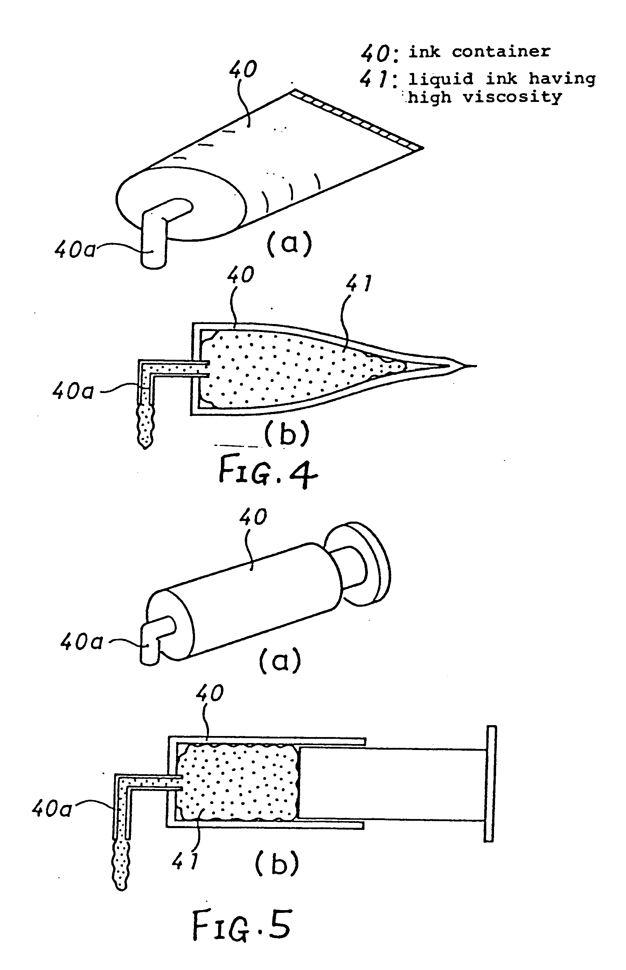

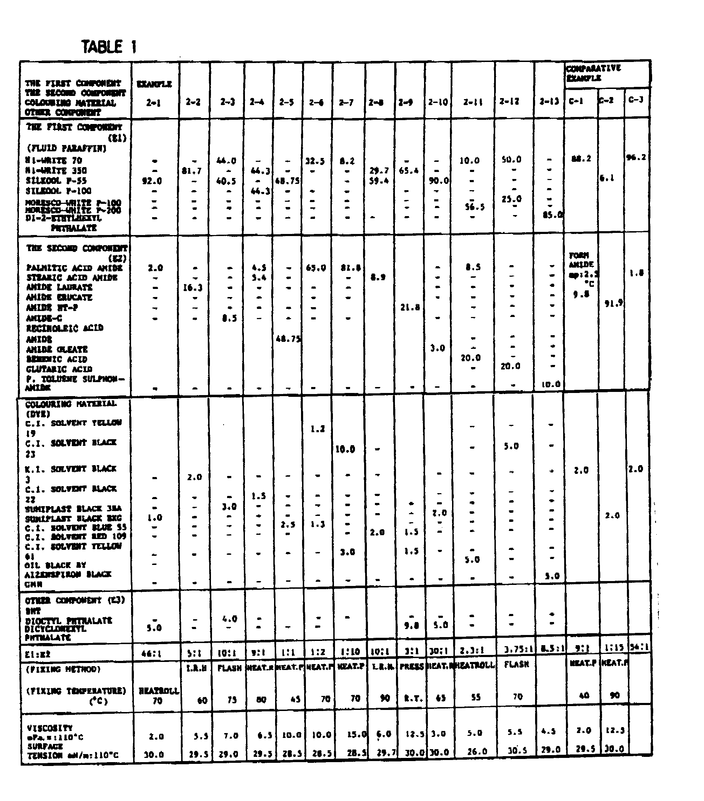

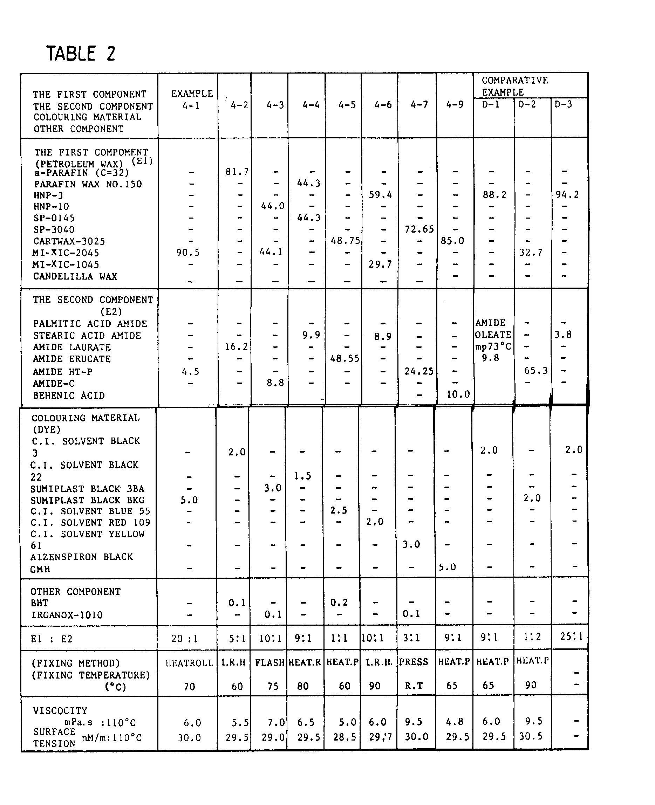

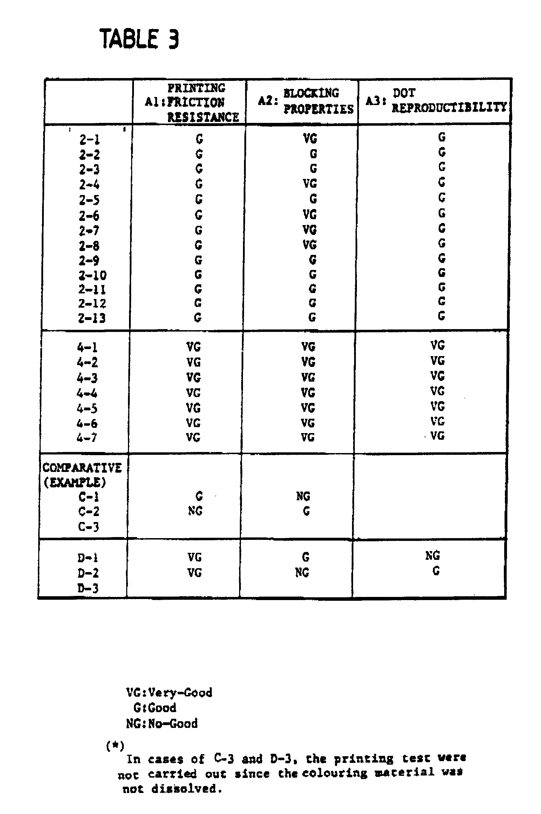

Figures 4 (a) and 4 (b) show one example of an ink container in which an ink composition having high viscosity is contained. Figures 5 (a) and 5 (b) show another embodiment. Figures 4 (a) and 4 (b) show a tube shaped ink container and Figures 5 (a) and 5 (b) show a cylindrical ink container. In these Figures, the reference numeral 40 is the ink container and the reference numeral 41 is an ink composition having high viscosity.

When the head is stopped, an ink supply door 20 (Figure 2) at the rear of the head is opened. Ink composition 41 having high viscosity is pushed out by hand from the ink container 40 into an ink sub-tank 24. The ink supply door 20 is then closed and the head is operated. The ink composition having a high viscosity is moved downwards by gravity from the ink sub-tank 24 into the vicinity of the piezo-electric transducer 31. The ink composition is heated by heater 21 to reduce its viscosity. Then the ink travels by capillary action through the gap between the nozzle plate 27 and the piezo-electric transducer 31, thereby reaching the vicinity of the nozzles. Further, by heating the ink composition in the ink sub-tank of the head, its high viscosity can be lowered so that it moves downwardly more promptly.

Selective jetting operation of the ink composition are carried out by displacing the piezo-electric transducer towards a selected nozzle. An ink outlet 40a of the ink container 40 may be shaped like a hooked tube as shown in Figures 4 and 5, this shape being particularly suitable for supplying ink composition to the head. Alternatively, the cylindrical shaped container shown in Figures 5 (a) and 5 (b) can be used for supplying ink composition. Furthermore, the method of ink supply is not limited to manual operation: an ink container can be incorporated in the apparatus so that ink composition can be automatically supplied by a pressure apparatus.

Moreover, an ink composition having a viscosity of 10⁴ mPa.s shows some flowability, and can be moved by gravity. Further, an ink composition having a viscosity of not less than 10⁵ mPa.s is in a hard grease state, and so its shape does not change readily and consequently it can be easily treated and handled.

In the head illustrated, the ink composition flows upwardly to the nozzles by capillary action. Alternatively, by providing an ink reservoir above the nozzles, the ink composition flow thereto can be by gravity. In the head described above semi-solid ink composition having high viscosity is used, however, a solid ink composition can be used. Solid ink compositions promptly solidify even if liquefied ink leaks from the head. Melted solid ink compositions can be moved by gravity etc. in the same way as the semi-solid ink composition already discussed.

As mentioned above, an ink composition according to the present invention provides high strength of ink fixing to recording media and good print quality whose friction resistance and dot re-producibility is good, regardless of the quality of the recording media. This effect is due to the selective permeation of the first component and the deposition of the colouring material. Further, the ink fixing process also makes the ink composition permeate into the recording media and the re-producibility of printed dots is good and the strength of fixing is improved without ink blur. Furthermore, the ink compositions are solid or semi-solid at ambient temperature and hardly flow and, therefore, when ink compositions are supplied into the print head, the supply method can be labour saving and simplified and the supply space can be reduced. Furthermore, even if the ink composition is spilt or leaks when the print head is filled, widespread contamination is avoided. In addition, the ink surface is not moved as a result of acceleration or deceleration of the head. Therefore, cavitation due to bubbles in the ink composition can be prevented and movement of the head can be stabilised. Further, as the ink composition is solid or semi-solid ink does not permeate into a user's clothing or documents especially when filling the head. Consequently, ink pollution is reduced.

## Claims

1. An ink composition for use with ink jet recording apparatus, the composition being in a liquid state at a temperature above ambient temperature and consisting of at least a colouring material, a first component which is a petroleum wax, a fluid paraffin, a mixture of a petroleum wax and a fluid paraffin, and a second component which is any one or more of fatty acid amide, aromatic amide, aromatic sulphonamide, fatty acid and fatty dibasic acid, characterised in that the composition has a viscosity of not less than 10⁴ mPa.s at ambient temperature, the second component has a melting point that is higher than that of the first component and when the composition is applied to a recording medium, the first component permeates thereinto and the second component and colouring material do not substantially permeate thereinto with the first component.

2. An ink composition as claimed in claim 1 characterised in that, when applied to a recording medium, the first component permeates thereinto by application of heat or pressure.

3. An ink composition as claimed in claim 1 or 2 characterised in that the colouring material is dissolved in the second component.

4. An ink composition as claimed in any preceding claim characterised in that it is semi-solid at ambient temperature.

5. An ink composition as claimed in claim 1, 2 or 3 characterised in that it is solid at ambient temperature.

6. An ink composition as claimed in any preceding claim characterised in that the weight ratio of the first component and the second component is between 50:1 and 1:10.

7. An ink composition as claimed in any preceding claim characterised in that, at the melting point of the second component, the first component, the second component and the colouring material form a uniform phase.

8. An ink composition as claimed in any preceding claim characterised in that the melting point of the second component is not less than 60°C,

9. An ink composition as claimed in claim 1, 3, 4, 6, 7 or 8, characterised in that the melting point of the second component is not less than 50° higher than that of the first component.

10. An ink composition as claimed in claim 1, 2, 3, 5, 6, 7, or 8 characterised in that the melting point of the first component is different by not less than 10° than that of the second component.

11. An ink composition as claimed in claim 1 characterised in that the petroleum wax is paraffin or paraffin wax, or micro-crystalline wax, or a compound wax formed from these waxes as major components.

12. An ink composition as claimed in any preceding claim characterised in that the colouring material is a dye or a mixture of dyes.

13. An ink composition as claimed in any preceding claim characterised by including ester phthalate compound or polyol-benzoate.

14. An ink jet recording apparatus for jetting ink which is liquid at elevated temperature above ambient temperature comprising: a heat means for heating an ink composition comprising a colouring material, a first component and a second component which has a melting point higher than that of the first component, and having a viscosity of not less than 10⁴mPa.s at ambient temperature; and a jet means for jetting said heated ink composition onto a recording medium.

15. An ink jet recording method for jetting ink in a liquid phase at an elevated temperature above ambient temperature, comprising: heating an ink composition comprising a colouring material, a first component and a second component which has a melting point higher than that of the first component, and having a viscosity of not less than 10⁴mPa.s at ambient temperature, so that the temperature of ink is higher than ambient temperature; and jetting the ink composition onto a recording medium.

16. An ink jet recording method as claimed in claim 15 characterised by comprising a step of fixing the ink composition applied to the recording medium by applying thereto the heat or pressure.

17. An ink compositon for use with ink jet recording apparatus, the composition being in a liquid state at a temperature above ambient temperature and consisting of at least a colouring material, a first component and a second component, characterised in that the composition has a viscosity of not less than 10⁴ mPa.s at ambient temperature, the first component is a wax or wax-like substance, and the second component is an organic material selected from the groups consisting of fatty amides, aromatic amides, aromatic sulphonamides, fatty acids, fatty dibasic acids and combinations thereof and has a melting point that is higher than that of the first component.

18. An ink composition as claimed in claim 1, further characterised by the inclusion of an ester phthalate compound as an additive.

19. An ink composition as claimed in claim 18, further characterised by the said additive being in the range 5 wt% to 10 wt% of the ink composition.

## Patentansprüche

1. Tintenzusammensetzung zur Verwendung mit einer Tintenstrahl-Aufzeichnungsvorrichtung, wobei die Zusammensetzung in einem flüssigen Zustand bei einer Temperatur über der Umgebungstemperatur ist und aus mindestens einem farbbildenden Material, einer ersten Komponente, die ein Petroleumwachs, ein fließendes Paraffin, ein Gemisch eines Petroleumwachses und eines fließenden Paraffins ist, und einer zweiten Komponente besteht, die ein Fettsäureamid, ein aromatisches Amid, ein aromatisches Sulfonamid, eine Fettsäure und/oder eine zweibasige Fettsäure ist,
**dadurch gekennzeichnet,**
daß die Zusammensetzung eine Viskosität von nicht weniger als 10⁴ mPa·s bei Umgebungstemperatur aufweist, die zweite Komponente einen Schmelzpunkt aufweist, der höher als derjenige der ersten Komponente ist, und bei Aufbringen der Zusammensetzung auf ein Aufzeichnungsmedium die erste Komponente darin eindringt und die zweite Komponente und das farbbildende Material im wesentlichen nicht mit der ersten Komponente darin eindringen.

2. Tintenzusammensetzung nach Anspruch 1,
**dadurch gekennzeichnet,**
daß bei Aufbringen auf ein Aufzeichnungsmedium die erste Komponente durch Anwendung von Wärme oder Druck darin eindringt.

3. Tintenzusammensetzung nach Anspruch 1 oder 2,
**dadurch gekennzeichnet,**
daß das farbbildende Material in der zweiten Komponente gelöst ist.

4. Tintenzusammensetzung nach einem der vorhergehenden Ansprüche,
**dadurch gekennzeichnet,**
daß sie Umgebungstemperatur halbfest ist.

5. Tintenzusammensetzung nach Anspruch 1, 2 oder 3,
**dadurch gekennzeichnet,**
daß sie bei Umgebungstemperatur fest ist.

6. Tintenzusammensetzung nach einem der vorhergehenden Ansprüche,
**dadurch gekennzeichnet,**
daß das Gewichtsverhältnis der ersten Komponente und der zweiten Komponente zwischen 50:1 und 1:10 ist.

7. Tintenzusammensetzung nach einem der vorhergehenden Ansprüche,
**dadurch gekennzeichnet,**
daß die erste Komponente, die zweite Komponente und das farbbildende Material am Schmelzpunkt der zweiten Komponente eine gleichförmige Phase bilden.

8. Tintenzusammensetzung nach einem der vorhergehenden Ansprüche,
**dadurch gekennzeichnet,**
daß der Schmelzpunkt der zweiten Komponente nicht weniger als 60°C ist.

9. Tintenzusammensetzung nach Anspruch 1, 3, 4, 6, 7 oder 8,
**dadurch gekennzeichnet,**
daß der Schmelzpunkt der zweiten Komponente nicht um weniger als 50° höher als derjenige der ersten Komponente ist.

10. Tintenzusammensetzung nach Anspruch 1, 2, 3, 5, 6, 7 oder 8,
**dadurch gekennzeichnet,**
daß der Schmelzpunkt der ersten Komponente sich nicht um weniger als 10° von demjenigen der zweiten Komponente unterscheidet.

11. Tintenzusammensetzung nach Anspruch 1,
**dadurch gekennzeichnet,**
daß das Petroleumwachs Paraffin oder Paraffinwachs oder mikrokristallines Wachs oder ein aus diesen Wachsen als Hauptkomponenten gebildetes Mischwachs ist.

12. Tintenzusammensetzung nach einem der vorgehenden Ansprüche,
**dadurch gekennzeichnet,**
daß das farbbildende Material ein Farbstoff oder ein Gemisch von Farbstoffen ist.

13. Tintenzusammensetzung nach einem der vorhergehenden Ansprüche,
**dadurch gekennzeichnet,**
daß sie eine Esterphthalatverbindung oder ein Polyolbenzoat enthält.

14. Tintenstrahl-Aufzeichnungsvorrichtung zum Verspritzen von Tinte, die bei erhöhter Temperatur über der Umgebungstemperatur flüssig ist, umfassend: ein Heizmittel zum Erhitzen einer Tintenzusammensetzung, die ein farbbildendes Material, eine erste Komponente und eine zweite Komponente, die einen höheren Schmelzpunkt als die erste Komponente aufweist, enthält und eine Viskosität von nicht weniger als 10⁴ mPa·s bei Umgebungstemperatur aufweist, und ein Spritzmittel zum Spritzen der erhitzten Tintenzusammensetzung auf ein Aufzeichnungsmedium.

15. Tintenstrahl-Aufzeichnungsverfahren zum Verspritzen von Tinte in einer flüssigen Phase bei einer erhöhten Temperatur über der Umgebungstemperatur, umfassend: Erhitzen einer Tintenzusammensetzung, die ein farbbildendes Material, eine erste Komponente und eine zweite Komponente, die einen höheren Schmelzpunkt als die erste Komponente aufweist, enthält und eine Viskosität von nicht weniger als 10⁴ mPa·s bei Umgebungstemperatur aufweist, so daß die Temperatur der Tinte höher als die Umgebungstemperatur ist, und Spritzen der Tintenzusammensetzung auf ein Aufzeichnungsmedium.

16. Tintenstrahl-Aufzeichnungsverfahren nach Anspruch 15,
**dadurch gekennzeichnet,**
daß es einen Schritt des Fixierens der auf das Aufzeichnungsmedium aufgebrachten Tintenzusammensetzung durch Anwendung von Hitze oder Druck darauf umfaßt.

17. Tintenzusammensetzung zur Verwendung mit einer Tintenstrahl-Aufzeichnungsvorrichtung, wobei die Zusammensetzung bei einer Temperatur über der Umgebungstemperatur in einem flüssigen Zustand ist und aus mindestens einem farbbildenden Material, einer ersten Komponente und einer zweiten Komponente besteht,
**dadurch gekennzeichnet,**
daß die Zusammensetzung eine Viskosität von nicht weniger als 10⁴ mPa·s bei Umgebungstemperatur aufweist, die erste Komponente ein Wachs oder eine wachsartige Substanz ist und die zweite Komponente ein organisches Material, ausgewählt aus den Gruppen, bestehend aus Fettamiden, aromatischen Amiden, aromatischen Sulfonamiden, Fettsäuren, zweibasigen Fettsäuren und Kombinationen davon ist und einen Schmelzpunkt aufweist, der höher als derjenige der ersten Komponente ist.

18. Tintenzusanmensetzung nach Anspruch 1, weiterhin
**dadurch gekennzeichnet,**
daß sie eine Esterphthalatverbindung als Additiv enthält.

19. Tintenzusammensetzung nach Anspruch 18, weiterhin
**dadurch gekennzeichnet,**
daß das Additiv im Bereich von 5 Gew.-% bis 10 Gew.-% der Tintenzusammensetzung ist.

## Revendications

1. Composition d'encre destinée à être utilisée avec un appareil d'enregistrement à jet d'encre, la composition étant à l'état liquide à une température supérieure à la température ambiante et étant composée d'au moins une matière colorante, d'un premier composant qui est une cire de pétrole, une paraffine fluide, un mélange de cire de pétrole et de paraffine fluide, et un deuxième composant qui est au moins une ou plusieurs des substances suivantes: amide d'acide gras, amide aromatique, sulfonamide aromatique, acide gras et acide gras dibasique, caractérisée en ce que la composition a une viscosité non inférieure à 10⁴ mPa.s à la température ambiante, le deuxième composant a un point de fusion qui est supérieur à celui du premier composant et en ce que, lorsque la composition est appliquée à un milieu d'enregistrement, le premier composant pénètre à travers ce milieu et le deuxième composant et la matière colorante ne pénètrent pas sensiblement dans ce milieu avec le premier composant.

2. Composition d'encre selon la revendication 1, caractérisée en ce que, lorsqu'elle est appliquée à un milieu d'enregistrement, le premier composant pénètre dans ce milieu sous l'effet d'une application de chaleur ou de pression.

3. Composition d'encre selon la revendication 1 ou 2, caractérisée en ce que la matière colorante se dissout dans le deuxième composant.

4. Composition d'encre selon l'une quelconque des revendications précédentes, caractérisée en ce qu'elle est semi-solide à la température ambiante.

5. Composition d'encre selon la revendication 1, 2 ou 3, caractérisée en ce qu'elle est solide à la température ambiante.

6. Composition d'encre selon l'une quelconque des revendications précédentes, caractérisée en ce que le rapport en poids entre le premier composant et le deuxième composant est compris entre 50:1 et 1:10.

7. Composition d'encre selon l'une des revendications précédentes, caractérisée en ce qu'au point de fusion du deuxième composant, le premier composant, le deuxième composant et la matière colorante forment une phase uniforme.

8. Composition d'encre selon l'une quelconque des revendications précédentes, caractérisée en ce que le point de fusion du deuxième composant n'est pas inférieur à 60°C.

9. Composition d'encre selon l'une des revendications 1, 3, 4 à 8, caractérisée en ce que le point de fusion du deuxième composant n'est pas inférieur à une température supérieure de 50° à celle du premier composant.

10. Composition d'encre selon l'une des revendications 1 à 8, caractérisée en ce que le point de fusion du premier composant diffère de pas moins de 10° de celui du deuxième composant.

11. Composition d'encre selon la revendication 1, caractérisée en ce que la cire de pétrole est la paraffine ou une cire de paraffine, ou une cire micro-cristalline, ou une cire composite formée de ces deux cires comme composants principaux.

12. Composition d'encre selon l'une des revendications précédentes, caractérisée en ce que la matière colorante est un colorant ou un mélange de colorants.

13. Composition d'encre selon l'une quelconque des revendications précédentes, caractérisée en ce qu'elle comprend un composé d'ester phtalate ou de benzoate de polyol.

14. Appareil d'enregistrement à jet d'encre destiné à projeter une encre qui est liquide à une température supérieure à la température ambiante, comprenant : un moyen de chauffage destiné à chauffer une composition d'encre comprenant une matière colorante, un premier composant, et un deuxième composant qui possède un point de fusion supérieur à celui du premier composant et une viscosité non inférieure à 10⁴ mPa.s à la température ambiante, et un moyen de projection destiné à projeter ladite composition d'encre chauffée sur un milieu d'enregistrement.

15. Procédé d'enregistrement à jet d'encre destiné à projeter de l'encre en phase liquide à une température supérieure à la température ambiante, consistant à chauffer une composition d'encre comprenant une matière colorante, un premier composant, et un deuxième composant qui possède un point de fusion supérieur à celui du premier composant et une viscosité non inférieure à 10⁴ mPa.s à la température ambiante, de manière que la température de l'encre soit supérieure à la température ambiante et à projeter la composition d'encre sur un milieu d'enregistrement.

16. Procédé d'enregistrement à jet d'encre selon la revendication 15, caractérisé en ce qu'il comprend une phase consistant à fixer la composition d'encre appliquée au milieu d'enregistrement en lui appliquant de la chaleur ou une pression.

17. Composition d'encre destinée à être utilisée avec un appareil d'enregistrement à jet d'encre, la composition étant dans un état liquide à une température supérieure à la température ambiante et étant composée d'au moins une matière colorante, d'un premier composant et d'un deuxième composant, caractérisée en ce que la composition a une viscosité non inférieure à 10⁴ mPa.s à la température ambiante, le premier composant est une cire ou une substance analogue aux cires, et le deuxième composant est une matière organique choisie parmi les groupes composés des amides grasses, des amides aromatiques, des sulfonamides aromatiques, des acides gras, des acides gras dibasiques et des combinaisons de ces substances, et possède un point de fusion qui est supérieur à celui du premier composant.

18. Composition d'encre selon la revendication 1, caractérisée en outre par l'inclusion d'un composé ester phtalate en tant qu'additif.

19. Composition d'encre selon la revendication 18, caractérisée en ce ledit additif constitue entre 5% en poids et 10% en poids de la composition d'encre.
